# EUROPÄISCHE PATENTSCHRIFT

(11) **EP 0 518 164 B1**
(45) Veröffentlichungstag und Bekanntmachung des Hinweises auf die Patenterteilung: **26.04.1995**
(21) Anmeldenummer: 92109228.4
(22) Anmeldetag: 02.06.1992
(51) Int. Cl.: B60K 41/26, B60T 11/10

(54) **Vorrichtung zum Feststellen eines Bremsgestänges**
Arrangement for blocking a brake linkage
Dispositif pour bloquer la timonerie de frein

(30) Priorität: 14.06.1991 US 715534
(43) Veröffentlichungstag der Anmeldung: 16.12.1992
(73) Patentinhaber: DEERE & COMPANY, Moline, Illinois 61265 (US)
(72) Erfinder: Hutchison, Wayne Robert, Mayville, Wisconsin 53050 (US); Wasson, Steven Charles, Midland, Michigan 48667 (US)
(74) Vertreter: Feldmann, Bernhard

(56) Entgegenhaltungen:
- GB-A- 1 202 900
- GB-A- 1 202 900
- US-A- 4 004 665
- US-A- 4 296 846
- US-A- 4 301 901
- US-A- 4 844 227

## Beschreibung

Die Erfindung bezieht sich auf ein Fahrzeug mit einem bei betätigter Bremse feststellbaren Bremsgestänge und einem Bedienungshebel zum Schalten eines Fahrzeuggetriebes aus seiner Neutralstellung in mindestens eine Stellung für einen Fahrbetrieb, der in einer Schaltgasse auf einem ersten Stellweg zum Schalten des Getriebes aus seiner Neutralstellung in mindestens eine Stellung für Fahrbetrieb und in einer zweiten Schaltgasse auf einem zweiten Stellweg verstellbar ist, der von der Neutralstellung in der ersten Schaltgasse abzweigt.

Bei diesem Fahrzeug (US-A-4 844 227) ist die Bremse über ein Gestänge an ein Bremspedal und an den Bedienungshebel angeschlossen. Wird der Bedienungshebel in der zweiten Schaltgasse verstellt, so wird die Bremse betätigt. Außerdem zweigt von der zweiten Schaltgasse eine dritte Schaltgasse ab, in der der Bedienungshebel bei betätigter Bremse feststellbar ist. Damit benötigt dieses Fahrzeug ein aufwendiges und damit teures Bremsgestänge.

Andererseits ist es auch nicht mehr neu (GB-A-1 202 900), ein Bremspedal in einer betätigten Stellung festzusetzen, wobei die Bewegung eines Schalthebels dazu genutzt wird, um die das Bremspedal festsetzende Mittel wieder zu lösen. In dem entsprechenden Dokument ist jedoch nicht offenbart, wie dies erfolgen soll.

Die mit der Erfindung zu lösende Aufgabe wird darin gesehen, die Feststellvorrichtung für eine Bremse vorteilhafter und mit wenigen Teilen auszubilden. Diese Aufgabe ist nach der Erfindung dadurch gelöst worden, daß das Bremsgestänge derart ausgebildet ist, daß es gegen den Bedienungshebel bei betätigter Bremse und sich in der zweiten Schaltgasse befindlichem Bedienungshebel zur Anlage kommt und festgestellt ist. Auf diese Weise ist der Bedienungshebel für das Getriebe mit dem Feststellhebel für das Bremsgestänge kombiniert. Ein zweiter Hebel mit einem zugehörigen Gestänge entfällt. Die Feststellung des Bremsgestänges wird durch besonders einfache Maßnahmen erreicht.

Um eine Feststellung der Bremse auszuschließen, insbesondere bei stehendem Fahrzeug und eingelegtem Vorwärts- oder Rückwärtsgang, wird nach der Erfindung ferner vorgeschlagen, daß die erste Schaltgasse derart ausgebildet ist, daß sie ein Verstellen des Bedienungshebels in die zweite Schaltgasse verhindert, solange das Getriebe eine Stellung für Fahrbetrieb aufweist. Dieser Vorschlag trägt zur Sicherheit bei und verhindert, daß bei laufendem Motor sich das Fahrzeug ungewollt in Bewegung setzen kann, wenn die Feststellbremse gelöst wird.

Dadurch, daß der Bedienungshebel in Richtung auf die zweite Schaltgasse vorgespannt sein kann, wird erreicht daß in der Neutralstellung der Bedienungshebel selbsttätig in seine Feststellstellung springen kann.

Vorteilhaft ist der Bedienungshebel über eine Schwenkverbindung mit dem Rahmen verbunden und ein Führungsteil ist vorgesehen, der den Bedienungshebel auf seinem zweiten Stellweg führt. Dieser dient gleichzeitig als Anschlag, ist am Rahmen des Fahrzeuges festgelegt und verhindert, daß das Bremsgestänge den Bedienungshebel verstellen kann.

Damit bei festgestellter Bremse nicht ein Gang versehentlich eingelegt werden kann, sieht die Erfindung ferner vor, daß die zweite Schaltgasse derart ausgebildet ist, daß sie ein Verstellen des Bedienungshebels in der Richtung des ersten Stellweges verhindert, solange sich der Bedienungshebel in seiner zweiten Schaltgasse befindet.

Um Schaltfehler auszuschließen, ist ferner vorgesehen, daß die erste Schaltgasse sich im wesentlichen linear erstreckt und die zweite Schaltgasse senkrecht zu der ersten Schaltgasse angeordnet ist.

Damit das Bremsgestänge in einfacher Weise blockiert werden kann, wird außerdem vorgeschlagen, daß der Bedienungshebel mit einem sich seitlich erstreckenden Ausleger versehen ist, gegen den das Bremsgestänge zur Anlage kommen kann.

Auch das Bremsgestänge braucht nicht mit einem besonderen Anschlag versehen zu werden, wenn das Bremsgestänge so ausgebildet wird, daß es einen vertikal abgesetzten Teil bildet, der gegen den Ausleger zur Anlage bringbar ist.

Ein herkömmliches Bremsgestänge braucht nur leicht abgeändert zu werden, um in besonders einfacher Weise mit dem Bedienungshebel zusammenwirken zu können. Die Abänderung sieht nach einem anderen erfinderischen Vorschlag dann so aus, daß anstelle eines im wesentlichen gerade verlaufenden Gestänges, das Bremsgestänge einen sich von einem Bremspedal nach rückwärts erstreckenden ersten Abschnitt aufweist, an den sich der vertikal abgesetzte Teil anschließt, der wiederum mit einem zweiten Abschnitt verbunden ist, der tiefer angeordnet ist als der erste Abschnitt und in Richtung auf das Bremspedal vorgespannt ist.

Schließlich braucht auch ein herkömmlicher Schalthebel für ein Getriebe nur leicht geändert zu werden, um in einfacher Weise das Bremsgestänge feststellen zu können. Nach der Erfindung kann eine einfache Maßnahme darin gesehen werden, daß der Bedienungshebel an seinem unteren Ende U-förmig ausgebildet ist, mit seinem einen Schenkel an den Rahmen in zwei Richtungen verstellbar angeschlossen ist und an dem anderen Schenkel den sich seitlich und im wesentlichen horizontal erstreckenden Ausleger aufweist.

In der Zeichnung ist ein nachfolgend näher erläutertes Ausführungsbeispiel der Erfindung dargestellt. Es zeigt:
- Fig. 1: ein Fahrzeug für die Grundstückspflege in perspektivischer Darstellung,
- Fig. 2: ein Schalt- und Bremsgestänge mit eingelegter Parkbremse,
- Fig. 3: das Gestänge nach Fig. 2 bei unbetätigtem Bremspedal und einem sich in der Neutralstellung befindlichen Bedienungshebel und
- Fig. 4: das Gestänge nach Fig. 2 mit betätigtem Bremspedal und dem sich in einer Schaltstellung befindlichen Bedienungshebel.

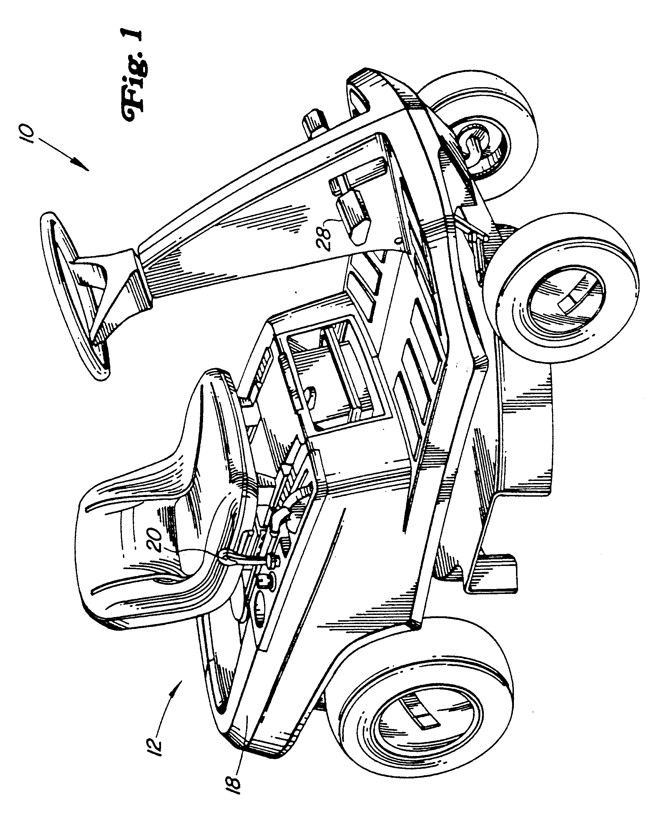

In Fig. 1 der Zeichnung ist ein Fahrzeug 10 für die Grundstückspflege dargestellt, dessen rückwärtigen Räder antreibbar sind. Zum Antrieb dient eine Kraftquelle, wie ein Verbrennungsmotor 12, von dem aus die Leistung auf ein Getriebe 14 übertragbar ist. Das Getriebe kann eine Neutralstellung, eine Stellung für Rückwärtsfahrt und mehrere Schaltstellungen für Vorwärtsfahrt einnehmen. Zum Schalten des Getriebes 14 ist ein Bedienungshebel 20 vorgesehen, der am Grundrahmen 18 des Fahrzeuges 20 über eine Schwenkverbindung 16 angeschlossen ist. Diese Schwenkverbindung läßt eine Bewegung des Bedienungshebels 20 in Fahrzeuglängsrichtung und in Fahrzeugquerrichtung zu. Der Bedienungshebel 20 steht über eine Schaltstange 22 mit dem Getriebe 14 in Verbindung und kann aus der Neutralstellungen in Schaltstellungen für Vorwärts- und Rückwärtsfahrt verstellt werden. Die Fahrzeuggeschwindigkeit kann dadurch variiert werden. Der Bedienungshebel 20 selbst ist in einer Schaltkonsole 24 verschwenkbar, die mit einem in Fahrzeuglängsrichtung verlaufenden Schaltschlitz 26 versehen ist, in dem der Bedienungshebel 20 aus seiner Neutralstellung in Schaltstellungen für Vorwärts- und Rückwärtsfahrt verstellbar ist.

Zum Abbremsen des Fahrzeuges 10 ist eine herkömmliche Bremse 32 vorgesehen. Sie wird über ein Bremspedal 28 betätigt, das mit einer Bremsstange 30 in Verbindung steht, die wiederum an einen Bremshebel 34 angreift. Je nach der Stellung des Bremshebels wird über die Bremse 32 das Fahrzeug überhaupt nicht gebremst, oder nur leicht oder zum Stillstand gebracht. Betätigt die Bedienungsperson mit dem Fuß das Bremspedal 28, so wird das Bremsgestänge 30 nach rückwärts verstellt, der Bremshebel 34 entgegen dem Uhrzeigerdrehsinn verschwenkt und die Bremse 32 angezogen.

Im angezogenen Zustand kann die Bremse 32 auch festgestellt werden, wozu der Bedienungshebel 20 in seine Parkstellung zu verschwenken ist. Um dies bewerkstelligen zu können, ist das Bremsgestänge 30 derart ausgebildet, daß es etwa in seinem mittigen Bereich einen abgesetzten Teil 36 aufweist, d. h. das Bremsgestänge weist einen frontseitigen und horizontal verlaufenden Teil auf, an den sich ein vertikal nach unten weisender Schenkel anschließt, von dem aus das Bremsgestänge wieder weiter nach rückwärts geführt ist. Anstelle dieses abgesetzten Teiles 36 kann natürlich auch ein entsprechend zu formender Anschlag vorgesehen werden. Dieser abgesetzte Teil kann gegen den Bedienungshebel zur Anlage kommen, weshalb der Bedienungshebel 20 einen sich seitlich nach außen erstreckenden Ausleger 38 in seinem unteren Bereich aufweist, der beim seitlichen Verschwenken des Bedienungshebels nach oben schwenkt. Damit der Bedienungshebel 20 in seiner Schaltkonsole 24 auch seitlich verschwenken kann, ist die Schaltkonsole 24 mit einem Parkschlitz 40 versehen, der sich rechtwinklig an den Schaltschlitz 26 anschließt und ein Verschwenken des Bedienungshebels nach seitlich außen zuläßt. Der Parkschlitz ist dabei derart ausgebildet, daß eine Verstellung des Bedienungshebels in Fahrzeuglängsrichtung ausgeschlossen ist, sobald der Bedienungshebel in den Parkschlitz verschwenkt wurde. Ein dritter Führungsschlitz 42 ist noch im Grundrahmen 18 vorgesehen und führt den seitlichen Ausleger 38 des Bedienungshebels 20, wenn der Ausleger nach oben schwenkt. Die Zuordnung von seitlichem Ausleger 38 und abgesetzten Teil 36 ist derart, daß der Ausleger 38 nur hochschwenkbar ist, wenn das Bremspedal 28 vollständig heruntergetreten ist. In einem solchen Fall kann der abgesetzte Teil 36 mit seinem vertikalen Schenkel gegen den Ausleger anliegen, und eine Bewegung des Bremsgestänges 30 nach vorne ist blockiert. Die Bremse wird dann in ihrem angezogenen Zustand festgehalten.

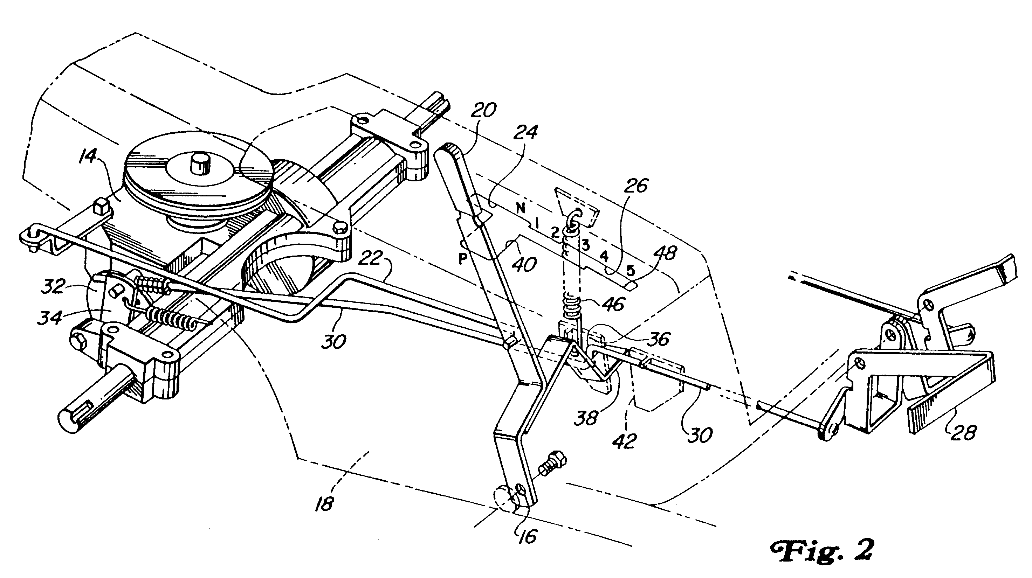

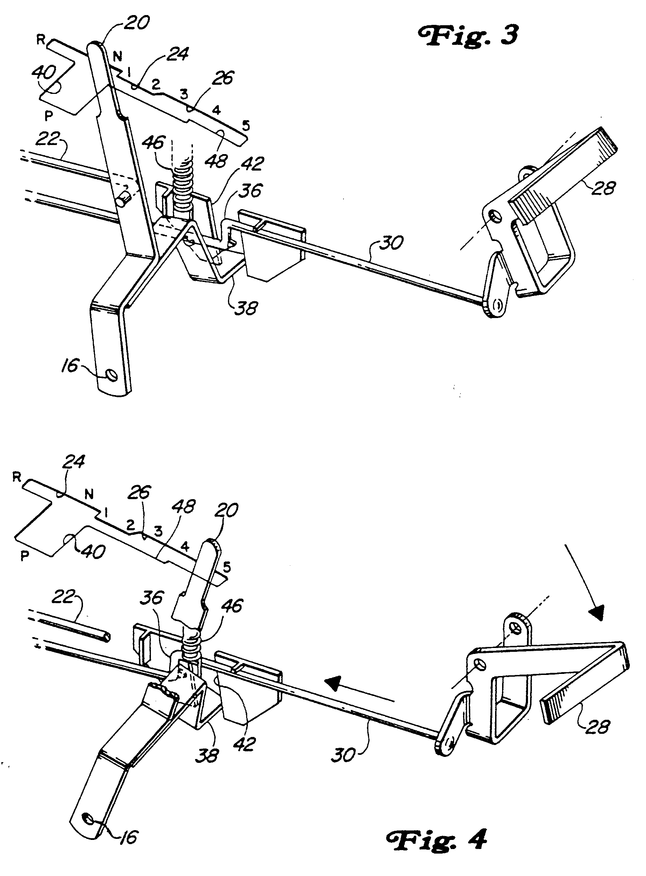

Befindet sich das Fahrzeug 10 im Einsatz, so kann eine Bedienungsperson den Bedienungshebel 20 in dem in Fahrzeuglängsrichtung verlaufenden Schaltschlitz 26 ohne weiteres verschwenken, wobei dann das Getriebe eine Neutralstellung, eine Stellung für Rückwärtsfahrt oder verschiedene Schaltstellungen für Vorwärtsfahrt einnehmen kann. Die verschiedenen Schaltstellungen sind in den Fig. 2 bis 4 mit 1 bis 5 für Vorwärtsfahrt, mit N für die Neutralstellung, mit R für Rückwärtsfahrt gekennzeichnet. P gilt für die festgestellte Position der Bremse oder Parkstellung. In Fig. 4 befindet sich der Bedienungshebel 20 in einer Position für Vorwärtsfahrt. Durch Längsverstellen des Bedienungshebels in seinem Schaltschlitz 26 kann damit die Fahrtrichtung und auch die Fahrgeschwindigkeit verändert werden.

Zum Abbremsen des Fahrzeuges 10 betätigt die Bedienungsperson das Bremspedal 28 mit ihrem Fuß. Beim Verschwenken des Bremspedals im Uhrzeigerdrehsinn wird sich das Bremsgestänge 30 nach rückwärts verstellen. Bei diesem Vorgang verschwenkt der Bremshebel 34 entgegen dem Uhrzeigerdrehsinn entgegen der Wirkung von mindestens einer Feder und die Bremse wird betätigt. Fig. 4 zeigt das Bremspedal 28 in seiner vollständig heruntergetretenen Stellung, während sich der Bedienungshebel 20 in einer Schaltstellung für Vorwärtsfahrt befindet.

Beendet die Bedienungsperson den Einsatz oder will das stehende Fahrzeug aus Sicherheitsgründen sichern, so kann die Parkbremse eingelegt werden, die beim vorliegenden Ausführungsbeispiel mit der Fahrzeugbremse identisch ist. Um dies auszuführen, muß die Bedienungsperson zunächst den Bedienungshebel 20 in seine Position N, in der das Fahrzeuggetriebe sich in seiner Neutralstellung befindet, zurückführen. Erst in dieser Stellung kann der Bedienungshebel 20 in seine Stellung P nach seitlich außen verschwenkt werden, und auch das nur, wenn das Bremspedal 28 vollständig heruntergetreten ist und das Bremsgestänge so weit nach rückwärts verstellt wurde, daß sich sein abgesetzter Teil hinter dem seitlichen Ausleger 38 befindet. Der seitliche Ausleger 38 des Bedienungshebels 20 hat dann genügend Freiraum, um in dem dritten Führungsschlitz 42 nach oben geschwenkt zu werden. Eine Feder 46 ist dabei noch derart an dem Bedienungshebel 20 angeschlossen, daß sie bestrebt ist, den Ausleger 38 nach oben zu verschwenken. Sobald bei eingerückter Bremse 32 der Ausleger 38 vor den abgesetzten Teil 36 schwenkt, ist das Bremsgestänge 30 in seiner Bewegung nach vorne blockiert. Die am Ende des Bremsgestänges vorgesehene Feder drückt dann den abgesetzten Teil 36 bzw. den vertikalen Schenkel gegen den Ausleger 38, der seinerseits gegen den dritten Führungsschlitz 42 anliegt und so in dieser Stellung gehalten wird.

Zum Lösen der Parkbremse empfiehlt es sich, daß die Bedienungsperson das Bremspedal in seiner heruntergetretenen Stellung gemäß Fig. 4 mit dem Fuß festhält, wonach der Bedienungshebel 20 entgegen der Wirkung der Feder 46 wieder in seinem Parkschlitz 40 nach innen verschwenkt werden kann. Der seitliche Ausleger 38 des Bedienungshebels schwenkt dabei wieder nach unten und gibt den abgesetzten Teil 36 des Bremsgestänges frei. Gibt dann die Bedienungsperson das Bremspedal 28 frei, so kann die am rückwärtigen Ende des Bremsgestänges 30 vorgesehene Feder das Bremsgestänge wieder nach vorne verstellen. Bei diesem Vorgang verstellt sich auch das Bremspedal 28 wieder in seine Ausgangsstellung und die Bremse 32 ist gelöst.

Beim bevorzugten Ausführungsbeispiel sind auch dafür Maßnahmen getroffen, daß eine Schaltung des Getriebes unmöglich ist, wenn sich die Bremse in ihrer Parkstellung bzw. der Bedienungshebel 20 in seiner Stellung P befindet. Aus den Fig. 2 bis 4 ist zu erkennen, daß die Position P zu der Position N ausgerichtet ist. Der Parkschlitz 40 ist in einem rechten Winkel zu dem Schaltschlitz 26 im Bereich der Stellung N angeordnet. Damit das Getriebe wieder eine Schaltstellung einnehmen kann, wenn sich der Bedienungshebel 20 in seiner Position P befindet, muß zunächst der Bedienungshebel 20 wieder nach innen in seinem Parkschlitz 40 zurückgeschwenkt werden und gelangt dann automatisch in die Stellung N, in der das Getriebe sich noch in seiner Neutralstellung befindet. In der Stellung N des Bedienungshebels 20 ist auch der Ausleger soweit nach unten verschwenkt, daß der abgesetzte Teil 36 freigegeben ist und das Bremsgestänge sich nach vorne verstellen kann, sofern die Bedienungsperson das Bremspedal 28 freigegeben hat. Aus seiner Stellung N kann dann der Bedienungshebel 20 nach vorne oder rückwärts in die gewünschte Schaltstellung verstellt werden, gleichgültig ob die Bremse noch eingerückt ist oder nicht. Die Schaltkonsole 24 ist damit so ausgelegt, daß der sich in seiner Parkstellung befindliche Bedienungshebel zunächst in seine Neutralstellung zurückgeführt werden muß, bevor das Getriebe geschaltet werden kann.

Beim bevorzugten Ausführungsbeispiel kann die Parkbremse auch nicht eingelegt werden, solange sich der Bedienungshebel 20 noch in einer Schaltstellung befindet. Der Bedienungshebel 20 ist innerhalb seines Schaltschlitzes 26 im wesentlichen nur in Fahrzeuglängsrichtung verschwenkbar und nur wesentlich in Querrichtung, wenn er sich in seinem Parkschlitz 40 befindet. Um seine verschiedenen Schaltstellungen einnehmen zu können, kann der Bedienungshebel 20 auch in seinem in Fahrzeuglängsrichtung verlaufenden Schaltschlitz 26 geringfügige Querbewegungen ausführen, die aber nicht ausreichen, um den Ausleger soweit hoch zu schwenken, daß er das Bremsgestänge blockieren könnte, da die seitliche Begrenzung 48 des Schaltschlitzes dies verhindert. Befindet sich der Bedienungshebel 20 in seinem Schaltschlitz 26 und nicht in seiner Neutralstellung, so ist das Einlegen der Parkbremse unmöglich. Diese Vielzahl von Funktionen wird mit äußerst wenigen Teilen erreicht. Zusätzliche Gestänge oder Sperren sind nicht erforderlich. Die Kosten für die Herstellung für den Zusammenbau sind damit erheblich reduziert.

Natürlich kann die Bedienungsperson das Bremspedal 28 auch betätigen, wenn sich der Bedienungshebel 20 in seiner Neutralstellung befindet, ohne daß der Bedienungshebel sofort in seine Parkstellung rutscht. Befindet sich der Bedienungshebel 20 in seiner Neutralstellung und ist das Bremspedal 28 nicht betätigt, wie es in der Fig. 3 dargestellt ist, dann wird der seitliche Ausleger 38 gegen die Unterseite des rückwärtigen Teils des Bremsgestänges zur Anlage kommen. Betätigt nun die Bedienungsperson das Bremspedal 28 und tritt es aber nicht sofort ganz herunter, um beispielweise die Fahrgeschwindigkeit zu verringern, dann verstellen sich das Bremsgestänge und der abgesetzte Teil 36 nach rückwärts, wobei das Bremsgestänge auf dem Ausleger gleitet. Der rückwärtige Teil des Bremsgestänges blockiert dabei eine weitere Aufwärtsbewegung des seitlichen Auslegers unter der Wirkung der Feder 46. Aus diesem Grund kann auch dann der Bedienungshebel 20 nicht in seine Schaltgasse für die Parkstellung verschwenken. Erst, wenn die Bedienungsperson das Bremspedal 28 soweit nach unten getreten hat, daß der abgesetzte Teil 36 des Bremsgestänges 30 hinter den Ausleger zu liegen kommt, hat der Bedienungshebel genügend Freiraum, um unter der Wirkung der Feder 46 in seinen Parkschlitz 40 eintreten zu können. Befindet sich der Bedienungshebel 20 dagegen in einer Schaltstellung, dann kann er unter keinen Umständen selbsttätig in seine Stellung P gelangen.

Alle vorbeschriebenen Funktionen werden damit mit einem einzigen Bedienungshebel ausgeführt, was ebenfalls zur Kostensenkung beiträgt.

## Patentansprüche

1. Fahrzeug mit einem bei betätigter Bremse (32) feststellbaren Bremsgestänge (30) und einem Bedienungshebel (20) zum Schalten eines Fahrzeuggetriebes (14) aus seiner Neutralstellung in mindestens eine Stellung für einen Fahrbetrieb, der in einer Schaltgasse (26) auf einem ersten Stellweg zum Schalten des Getriebes (14) aus seiner Neutralstellung in mindestens eine Stellung für Fahrbetrieb und in einer zweiten Schaltgasse (40) auf einem zweiten Stellweg verstellbar ist, der von der Neutralstellung (N) in der ersten Schaltgasse (26) abzweigt, dadurch gekennzeichnet, daß das Bremsgestänge (30) derart ausgebildet ist, daß es gegen den Bedienungshebel (20) bei betätigter Bremse (32) und sich in der zweiten Schaltgasse (40) befindlichem Bedienungshebel (20) zur Anlage kommt und festgestellt ist.

2. Fahrzeug nach Anspruch 1, dadurch gekennzeichnet, daß die erste Schaltgasse (26) derart ausgebildet ist, daß sie ein Verstellen des Bedienungshebels (20) in die zweite Schaltgasse (40) verhindert, solange das Getriebe (14) eine Stellung für Fahrbetrieb aufweist.

3. Fahrzeug nach Anspruch 1, dadurch gekennzeichnet, daß der Bedienungshebel (20) in Richtung auf die zweite Schaltgasse (40) vorgespannt ist.

4. Fahrzeug nach Anspruch 1, wobei das Fahrzeug (10) mit einem Rahmen (18) versehen ist, dadurch gekennzeichnet, daß der Bedienungshebel (20) über eine Schwenkverbindung (16) mit dem Rahmen (18) verbunden ist und ein Führungsteil (42) vorgesehen ist, der den Bedienungshebel (20) auf seinem zweiten Stellweg führt.

5. Fahrzeug nach einem oder mehreren der vorherigen Ansprüche, dadurch gekennzeichnet, daß die zweite Schaltgasse (40) derart ausgebildet ist, daß sie ein Verstellen des Bedienungshebels (20) in der Richtung des ersten Stellweges verhindert, solange sich der Bedienungshebel (20) in seiner zweiten Schaltgasse befindet.

6. Fahrzeug nach einem oder mehreren der vorherigen Ansprüche, dadurch gekennzeichnet, daß die erste Schaltgasse (26) sich im wesentlichen linear erstreckt und die zweite Schaltgasse (40) senkrecht zu der ersten Schaltgasse (26) angeordnet ist.

7. Fahrzeug nach einem oder mehreren der vorherigen Ansprüche, dadurch gekennzeichnet, daß der Bedienungshebel (20) mit einem sich seitlich erstreckenden Ausleger (38) versehen ist, gegen den das Bremsgestänge (30) zur Anlage kommen kann.

8. Fahrzeug nach Anspruch 7, dadurch gekennzeichnet, daß das Bremsgestänge (30) mit einem vertikal abgesetzten Teil (36) versehen ist, der gegen den Ausleger (38) zur Anlage bringbar ist.

9. Fahrzeug nach Anspruch 8, dadurch gekennzeichnet, daß das Bremsgestänge (30) einen sich von einem Bremspedal (28) nach rückwärts erstreckenden ersten Abschnitt aufweist, an den sich der vertikal abgesetzte Teil (36) anschließt, der wiederum mit einem zweiten Abschnitt verbunden ist, der tiefer angeordnet ist als der erste Abschnitt und in Richtung auf das Bremspedal (28) vorgespannt ist.

10. Fahrzeug nach Anspruch 7, dadurch gekennzeichnet, daß der Bedienungshebel (20) an seinem unteren Ende U-förmig ausgebildet ist, mit seinem einen Schenkel an den Rahmen (18) in zwei Richtungen verstellbar angeschlossen ist und an dem anderen Schenkel den sich seitlich und im wesentlichen horizontal erstreckenden Ausleger (38) aufweist.

## Claims

1. Vehicle with a brake linkage (30) which can be locked when the brake (32) is operated and with a control lever (20) for shifting a vehicle gearbox (14) from its neutral position into at least one position for a driving mode, which is displaceable in one shift channel (26) in a first adjusting movement for shifting the gearbox (14) from its neutral position into at least one position for driving mode and in a second shift channel (40) in a second adjusting movement which branches off from the neutral position (N) in the first shift channel (26), characterised in that the brake linkage (30) is constructed in such a way that it comes into abutment with and is locked against the control lever (20) when the brake (32) is operated and when the control lever (20) is in the second shift channel (40).

2. Vehicle according to claim 1, characterised in that the first shift channel (26) is constructed in such a way that it prevents displacement of the control lever (20) into the second shift channel (40) as long as the gearbox (14) displays a position for driving mode.

3. Vehicle according to claim 1, characterised in that the control lever (20) is biased in a direction towards the second shift channel (40).

4. Vehicle according to claim 1, wherein the vehicle (10) is provided with a frame (18), characterised in that the control lever (20) is connected to the frame (18) by a pivot joint (16) and there is provided a guide portion (42) which guides the control lever (20) in its second adjusting movement.

5. Vehicle according to one or more of the preceding claims, characterised in that the second shift channel (40) is constructed in such a way that it prevents displacement of the control lever (20) in the direction of the first adjusting movement as long as the control lever (20) is in its second shift channel.

6. Vehicle according to one or more of the preceding claims, characterised in that the first shift channel (26) extends essentially linearly and the second shift channel (40) is arranged perpendicularly to the first shift channel (26).

7. Vehicle according to one or more of the preceding claims, characterised in that the control lever (20) is provided with a laterally extending extension (38) with which the brake linkage (30) can come into abutment.

8. Vehicle according to claim 7, characterised in that the brake linkage (30) is provided with a vertically offset portion (36) which can be brought into abutment with the extension (38).

9. Vehicle according to claim 8, characterised in that the brake linkage (30) comprises a first section which extends rearwardly from a brake pedal (28) and which is adjoined by the vertically offset portion (36) which is in turn connected to a second section which is arranged lower than the first section and biased in a direction towards the brake pedal (28).

10. Vehicle according to claim 7, characterised in that the control lever (20) is U-shaped at its lower end, is connected by one arm to the frame (18) so as to be displaceable in two directions, and at the other arm comprises the laterally and essentially horizontally extending extension (38).

## Revendications

1. Véhicule comportant une timonerie de frein (30) pouvant être bloquée lorsque le frein (32) est actionné, et un levier de manoeuvre (20) servant à commuter une transmission (14) du véhicule depuis sa position neutre dans au moins une position pour un déplacement et qui est déplaçable dans une voie de commutation (26) sur un premier trajet de réglage aboutissant à la commutation de la transmission (14) depuis sa position neutre dans au moins une position pour un déplacement, et dans une seconde voie de commutation (40) sur un second trajet de réglage, qui s'étend en dérivation à partir de la position neutre (N) dans la première voie de commutation (26), caractérisé en ce que la timonerie de frein (30) est agencée de telle sorte qu'elle vient s'appliquer contre le levier de manoeuvre (20) et est bloquée, lorsque le frein (32) est actionné et que le levier de manoeuvre (20) est situé dans la seconde voie de commutation (40).

2. Véhicule selon la revendication 1, caractérisé en ce que la première voie de commutation (26) est agencée de telle sorte qu'un déplacement du levier de manoeuvre (20) dans la seconde voie de commutation (40) est empêché tant que la transmission (14) possède une position correspondant à un déplacement.

3. Véhicule selon la revendication 1, caractérisé en ce que le levier de manoeuvre (20) est précontraint en direction de la seconde voie de commutation (40).

4. Véhicule selon la revendication 1, dans lequel le véhicule (10) est pourvu d'un châssis (18), caractérisé en ce que le levier de manoeuvre (20) est relié au châssis (18) par l'intermédiaire d'une liaison pivotante (16), et qu'il est prévu une partie de guidage (42), qui guide le levier de manoeuvre (20) sur son second trajet de réglage.

5. Véhicule selon une ou plusieurs des revendications précédentes, caractérisé en ce que la seconde voie de commutation (40) est agencée de telle sorte qu'elle empêche un déplacement du levier de manoeuvre (20) dans la direction du premier trajet de réglage, tant que le levier de manoeuvre (20) est situé dans sa seconde voie de commutation.

6. Véhicule selon une ou plusieurs des revendications précédentes, caractérisé en ce que la première voie de commutation (26) est essentiellement linéaire et que la seconde voie de commutation (40) est disposée perpendiculairement à la première voie de commutation (26).

7. Véhicule selon une ou plusieurs des revendications précédentes, caractérisé en ce que le levier de manoeuvre (20) est équipé d'un bras en console latéral (38), contre lequel la timonerie de frein (30) peut venir s'appliquer.

8. Véhicule selon la revendication 7, caractérisé en ce que la timonerie de frein (30) est pourvue d'une partie (36) étagée verticalement, qui peut être appliquée contre le bras en console (38).

9. Véhicule selon la revendication 8, caractérisé en ce que la timonerie de frein (30) possède une première section, qui s'étend vers l'arrière à partir d'une pédale de frein (28) et se raccorde à la partie étagée verticalement (36), qui à nouveau est reliée à une seconde section, qui est située à un niveau plus bas que la première section et est précontrainte en direction de la pédale de frein (28).

10. Véhicule selon la revendication 7, caractérisé en ce que le levier de manoeuvre (20) est réalisé avec une forme en U au niveau de son extrémité inférieure, est raccordée, par l'une de ses branches, au châssis (18) de manière à être déplaçable dans deux directions, et possède, sur son autre branche, le bras en console (38) qui s'étend latéralement et essentiellement horizontalement.
